# EUROPÄISCHE PATENTSCHRIFT

(11) **EP 2 498 990 B1**
(45) Veröffentlichungstag und Bekanntmachung des Hinweises auf die Patenterteilung: **06.04.2022**
(21) Anmeldenummer: 10781427.9
(22) Anmeldetag: 09.11.2010
(51) Int. Cl.: B32B 27/08, A01F 25/13, A01F 25/14

(54) **SILAGEABDECKUNG**
SILAGE COVER
COUVERTURE DE SILO

(30) Priorität: 12.11.2009 DE 102009052948
(43) Veröffentlichungstag der Anmeldung: 19.09.2012
(73) Patentinhaber: RKW SE, 68309 Mannheim (DE)
(72) Erfinder: EGGERS, Holger, 36039 Fulda (DE)
(74) Vertreter: Zellentin & Partner mbB Patentanwälte
(86) Internationale Anmeldenummer: PCT/EP2010/006799
(87) Internationale Veröffentlichungsnummer: WO 2011/057752

(56) Entgegenhaltungen:
- WO-A1-2009/060480
- DE-A1-102004 008 085
- GB-A- 2 359 273
- DATABASE WPI Week 200417 Thomson Scientific, London, GB; AN 2004-172922 XP002635119, & JP 2003 276123 A (UBE IND LTD) 30. September 2003 (2003-09-30)

## Beschreibung

Die vorliegende Erfindung betrifft eine Silageabdeckung.

Zur Konservierung von Grünfutter in der Landwirtschaft wird seit vielen Jahren üblicherweise das Verfahren der Silierung angewandt. Hierzu wird geschnittenes und gegebenenfalls gehäckseltes Grüngut, üblicherweise Gras oder Mais, zunächst komprimiert und anschließend mit einer oder mehreren Folien in der Weise bedeckt, dass sich durch Milchsäurevergärung infolge von Sauerstoffabschluss eine konservierende Versäuerung der Silage einstellt.

Silagen können dabei in schlauch- oder ballenförmiger Ausführung gänzlich von Folie umschlossen sein. Hierzu bedarf es spezieller Erntemaschinen zur Erzeugung dieser Einheiten. Die mengenmäßig bedeutendste und kostengünstigste Art des Silobaus besteht jedoch aus Grünfutter, welches auf dem Boden zu Haufwerken aufgeschüttet und durch Folien abgedeckt wird. Hier wird wiederum nach Fahrsilos, welche zum Boden und an den seitlichen Wänden durch Betonwandungen eingefasst werden, und Freigärhaufen, welche keine konstruktiven seitlichen Begrenzungswände aufweisen, unterschieden. Bei beiden der letztgenannten, im Folgenden als Haufwerksilos bezeichneten, Varianten erfolgt eine Abdichtung und Abdeckung der Seitenwände und der Oberfläche durch Verwendung von Kunststofffolien.

Kunststofffolien, die nach dem Stand der Technik zur Abdichtung und Abdeckung von Haufwerksilos verwendet werden, bestehen üblicherweise zu überwiegenden Teilen aus Polyethylen (PE) und Copolymerisaten aus Ethylen und weiteren Monomeren, wie beispielsweise Propylen, Buten, Propen, Hexen, Okten, Ethylenvinylacetat und dergleichen. Beispiele sind lineares Polyethylen niederer Dichte (PE-LLD), Polyethylen niederer Dichte (PE-LD), Polyethylen hoher Dichte (PE-HD), Ethylenvinylacetat (EVA), Ethylen-Propylen-Copolymerisate (E/P).

Diese Silofolien nach dem Stand der Technik werden häufig aus optischen und/oder funktionellen Gründen mehrschichtig ausgeführt. So finden zweifarbige oder in der Mittelschicht preisgünstigere Zusammensetzungen enthaltende Folien Verwendung. Unter mehrschichtige Folie oder Mehrschichtfolie wird hier im Folgenden eine Folie verstanden, deren Einzelschichten unmittelbar und insbesondere ohne dazwischenliegende Luftschichten miteinander verbunden sind. Mehrschichtfolien werden nach dem Stand der Technik häufig durch Coextrusion hergestellt.

Es finden aber auch Monofolien, die aus nur einer Schicht bestehen, Verwendung.

Es ist weiterhin üblich, zur Abdeckung von Haufwerksilos nicht nur eine, sondern mehrere Lagen verschiedener polyolefinischer Mono- und/oder Mehrschichtfolien zu verwenden. Dabei wird hier im Folgenden eine Lage als eine von den übrigen Lagen durch leichtes Abziehen separierbare sowie üblicherweise in einem getrennten Arbeitsgang aufgelegte Struktur verstanden.

So wird nach neuerem Stand der Technik siloseitig zunächst eine dünne polyolefinische Folie, im Folgenden entsprechend dem deutschen Sprachgebrauch als Unterziehfolie bezeichnet, verwendet, welche mit einer dickeren polyolefinischen Folie, im Folgenden entsprechend dem deutschen Sprachgebrauch als Silofolie bezeichnet, in einem zweiten Arbeitsgang überdeckt wird.

Die Dicken üblicherweise verwendeter Unterziehfolien betragen etwa 40 µm, während üblicherweise verwendete Silofolien Dicken im Bereich von 100 bis 200 µm aufweisen.

Nach heutigem Stand der Technik werden diese beiden Folien getrennt voneinander hergestellt geliefert und auf ein Silo getrennt voneinander in zwei Arbeitsschritten aufwändig aufgelegt. Unterziehfolien und Silofolien wurden bisher nicht zusammen auf einer Rolle geliefert, da dies unter Anderem nur durch hohen zusätzlichen technischen Aufwand und damit höhere Kosten durch Umrollen lösbar ist und die Folienrollen dadurch teilweise auch ein hohes Eigengewicht erreichen und die Anwendung bzw. Auslegung sich dadurch zusätzlich erschwert.

Zusätzlich zu den einzelnen oder mehreren polyolefinischen Mono- und/oder Mehrschichtfolien wird nach dem Stand der Technik häufig zum mechanischen Schutz des Silos oberhalb der Folienabdeckung eine äußere Abdeckung gewählt. Diese äußere Abdeckung wird üblicherweise in Form eines Siloschutzgitters ausgeführt, welches nach dem Stand der Technik aus einem polyolefinischen, bevorzugt einem Hochdruckpolyethylen(HDPE)- oder Polypropylen(PP)-basierenden, Gewebe besteht. Die äußere Abdeckung hat die Hauptfunktion eines mechanischen Schutzes und eines Witterungsschutzes der darunterliegenden Silofolie. Die Abdeckung kann auch aus bereits benutzten Silofolien oder anderen ähnlich gearteten Elementen bestehen.

Es ist hinlänglich bekannt, dass polyolefinische Silofolien aufgrund des unpolaren Charakters polyolefinischer Kunststoffe vergleichsweise hohe Sauerstoffdurchlässigkeiten aufweisen. So wird im deutschsprachigen Raum bei der einschlägigen DLG-Norm und in der übrigen Literatur eine Sauerstoffdurchlässigkeit von 250 ml / (m² d bar) nach DIN 53380-3 bei 23 °C und 50 % relativer Feuchte und einem Sauerstoffpartialdruck von 0,2 bar als Obergrenze angesehen. Aber auch mit einer Sauerstoffdurchlässigkeit entsprechend dieser Normierung treten im Silo weiterhin aerobe Vergärungsprozesse auf, die zu Verderbnis und Futterverlust führen.

Neben polyolefinischen Kunststofffolien sind daher zur Abdeckung von Haufwerksilos auch Mehrschichtfolien mit anderen Polymeren bekannt, die das Problem der hohen Sauerstoffdurchlässigkeiten polyolefinischer Folien vermeiden.

JP 2003276123 A offenbart eine dreischichtige Folie für die Ballensilierung von Gras, wobei die Außenschichten aus polyolefinischen Kunststoffen und die Mittelschicht aus aliphatischem Polyamid bestehen. GB 2359273 A beschreibt Stretchverpackungsfolien mit mindestens zwei unterschiedlichen Elementen, bei denen ein zweites Element eine niedrigere Fluiddurchlässigkeit als das erste Element aufweist. Externe zweite Elemente können aus LLDPE, LDPE, EVA, Co- oder Terpolymeren aus Ethylen und Acrylsäure, Acrylat, Vinylacetat oder Styrol sein, interne erste Elemente aus Nylon, PET, EVOH oder Ethylen-Kohlenmonoxidcopolymer.

DE 102004008085 A1 beschreibt ein Verfahren zur Herstellung von Tierfutter aus Biomasse, wobei eine möglichst sauerstoff- und luftundurchlässige Verpackung gewählt wird. Es werden mehrschichtige Verbundfolien mit einer Sperrschicht, bevorzugt Ethylenvinylalkohol (EVOH), beschrieben, wobei der Aufbau der Verbundfolie vorzugsweise Außenschichten aus polyolefinischen Kunststoffen mit einer Mittelschicht aus EVOH umfassen soll.

Die WO 99/29154 offenbart eine Siloabdeckung aus einer Ein- oder Mehrschichtfolie, die mindestens eine sauerstoffdichte Schicht, bevorzugt aus Polyamid (PA), enthält. Weitere einsetzbare Kunststoffe sind Ethylenvinylalkohol (EVOH), Polyvinylalkohol (PVOH) und Mischungen daraus oder Mischungen mit anderen Kunststoffen. Übliche Ausführungen der Folien werden als Coextrudate mit dem Aufbau PE/PA/PE von Bruno Rimini Ltd, GB vertrieben und in der Anwendung mit einer weiteren mechanisch schützenden Abdeckung versehen.

Aus der WO 2009/060480 sind ein-oder mehrschichtige, wärmeisolierende Abdeckfolien zur Verwendung in der Landwirtschaft bekannt, die zumindest eine Lage aus Polyamid aufweisen sollen.

In der Praxis der Silierung tritt immer wieder das Problem von Schimmelbildung an der Oberfläche des Silierguts zur Folie hin auf, weil sich durch Kondensation an der der Silage zugewandten Folienoberfläche Feuchte niederschlägt, die aufgrund der hohen Wasserdampfsperrwirkung polyolefinischer Folien nicht nach außen entweichen kann.

Neben dem Sauerstoffabschluss ist eine weitere wesentliche Anforderung an Silofolien eine ausreichende mechanische Haltbarkeit. Der Betreiber oder Errichter des Haufwerksilos muss insbesondere in der Lage sein, das Silo auf der Silofolie bzw. der äußersten Abdeckung zu Inspektionszwecken begehen zu können. Daneben muss die Abdeckung Sicherheit gehen Vogelbiss, Hagelschlag und dergleichen bieten. Als wesentliche, die mechanische Festigkeit charakterisierende Eigenschaft einer Folie hat sich im Laufe der Zeit der Dart Drop nach EN ISO 7765-1 herausgestellt. Dabei hat sich in der Praxis ein Dart Drop von mindestens 300 g, für hochwertige Siloabdeckungen von wenigstens 450 g, als erforderlich herausgestellt.

Zunehmend wichtiger wird die Ressourceneffizienz von Silofolien. Zunächst kommt es hierfür wesentlich darauf an, den Materialeinsatz zu vermindern. Hier weisen naturgemäß Folien mit geringem Einsatzgewicht deutliche Vorteile auf. Daneben ist die Rezyklierbarkeit von Silofolien von hoher Bedeutung für die Ressourceneffizienz. Dabei können nur sortenreine Folien wie beispielsweise polyolefinische Folien nach Gebrauch und Reinigung stofflich rezykliert werden. Verbundfolien aus unterschiedlichen Werkstoffen lassen sich nicht werterhaltend rezyklieren, sondern müssen, auch als Downcycling bezeichnet, nach der Regenerierung niedrigerwertigen Anwendungen zugeführt werden.

Sämtliche nach dem Stand der Technik bekannten Folien für die Silierung mit einer verbesserten Sauerstoffsperre weisen den Nachteil auf, dass sich durch Kondensation und die Sperrwirkung der Folie gegenüber Wasserdampf Feuchtenester unter der Folie bilden. Daneben sind sie im Gegensatz zu den rein polyolefinischen Folien für eine werterhaltende stoffliche Rezyklierung ungeeignet und stellen den Anwender vor Probleme bei der Entsorgung der Folie nach Gebrauch.

Es stellte sich daher die Aufgabe, eine stofflich rezyklierbare Silageabdeckung mit geringem Materialeinsatz bereitzustellen, welche die bei Silofolien nach dem Stand der Technik unvermeidbaren Futterverluste durch zu hohe Sauerstoffdurchlässigkeit und/oder durch oberflächliche Feuchtenester verringert und dabei ausreichend hohe mechanische Festigkeiten sowie einen Schutz des Siloinhalts gegen Austrocknung ermöglicht. Die gesamte Abdeckung soll gleichzeitig in einem einzigen Arbeitsgang auf das Silo aufgebracht werden können und aufgrund der im Vergleich zu Abdeckungen nach bisherigem Stand der Technik möglichen Materialreduktion basierend auf den besseren Materialeigenschaften einfacher handhabar sein.

Erfindungsgemäß wird die gestellte Aufgabe durch eine wenigstens zweilagige Silageabdeckung gelöst, welche eine innere, dem Silo zugewandte erste Lage bestehend aus einer sauerstoffdichten und wasserdampfdurchlässigen ein-oder mehrschichtigen Kunststofffolie sowie wenigstens eine weitere, darüber liegende zweite Lage aufweist, die zu wenigstens 70 Gew.-% aus Materialien aus der Gruppe umfassend Polyethylen, Polypropylen, Copolymerisate aus Ethylen und anderen Vinylmonomeren sowie Copolymerisate aus Propylen und anderen Vinylmonomeren besteht, wobei die erste Lage eine Sauerstoffdurchlässigkeit von höchstens 500 cm³ / (m² d bar) und eine Wasserdampfdurchlässigkeit von wenigstens 5 g / ( m² d) hat und in wenigstens einer Schicht insgesamt wenigstens 50 Gew.-% einer oder mehrerer Materialien aus der Gruppe umfassend Polyamid, Copolyamid, Polyester, Copolyester, Polyethylenvinylalkohol, Polyvinylalkohol und Mischungen davon enthält, wobei die Silageabdeckung durch Coextrusion ohne Haftvermittler zwischen der ersten und der zweiten Lage herstellbar ist, so dass sich vor dem Ausbringen, beim Ausbringen, oder durch aktives Trennen der Lagen bei der Ausbringung, oder nach einigen Tagen Liegedauer auf einem Haufwerksilo die erste von der zweiten Lage separiert, wobei die Silageabdeckung in einem Arbeitsgang auf ein Silo aufgebracht werden kann.

Die Sauerstoffdurchlässigkeit wird im Rahmen der vorliegenden Erfindung nach DIN 53380-3 bei 23 °C und 50 % relativer Feuchte bestimmt, die Wasserdampfdurchlässigkeit nach ISO 15106-3 bei 23 °C und 85 % relativer Feuchte. Bevorzugt weist die erste Lage eine Sauerstoffdurchlässigkeit von höchstens 100 cm³ / (m² d bar) und eine Wasserdampfdurchlässigkeit von wenigstens 25 g / ( m² d) auf.

Vorzugsweise ist die erste Lage eine ein- oder mehrschichtigen Folie, die in jeder Schicht insgesamt wenigstens 30 %, bevorzugt wenigstens 50 % und noch weiter bevorzugt wenigstens 70 % einer oder mehrerer Materialien aus der Gruppe umfassend Polyamid, Copolyamid, Polyester, Copolyester, EVOH und PVOH, enthält. Besonders geeignet ist eine erste Lage, die in jeder Schicht neben Materialien aus der Gruppe umfassend Polyamid, Copolyamid, Polyester, Copolyester, EVOH und PVOH, höchstens 20 % und bevorzugt keine weiteren polymeren Bestandteile enthält.

Ganz besonders bevorzugt sind Mischungen aus Polyamiden und Copolyamiden, bevorzugt Mischungen aus PA6, PA6/66, PA66, PA 6I6T und/oder anderen aliphatischen, aromatischen oder teilaromatischen Polyamiden oder Copolyamiden. Vorzugsweise enthält daher die erste Lage in jeder Schicht insgesamt wenigstens 50 %, besonders bevorzugt wenigstens 70 % und noch weiter bevorzugt wenigstens 90 % einer oder mehrerer Materialien aus der Gruppe umfassend Polyamid und Copolyamid, bevorzugt PA6, PA 66, PA 6/66, PA 6I6T und/oder andere aliphatische, aromatische oder teilaromatische Polyamide oder Copolyamide. Insbesondere bevorzugt ist eine erste Lage in Form einer ein- oder mehrschichtigen Folie, die in jeder Schicht Mischungen aus PA6 und anderen Polyamiden und/oder Copolyamiden, noch weiter bevorzugt Mischungen aus PA6 und PA6/66, enthält. Es ist weiter bevorzugt, dass außer Polyamid und Copolyamid keine weiteren polymeren Materialien enthalten sind.

Die erste Lage kann in einer, mehreren oder allen Schichten Additive wie z.B. zur Erhöhung der Stabilität gegenüber UV-Strahlung und/oder Gleitmittel und/oder mineralische Antiblock-Additive zur Verringerung der Reibungskoeffizienten der Folienoberfläche und/oder Additive zur Einfärbung enthalten.

Es hat sich als vorteilhaft erwiesen, die erfindungsgemäße Siloabdeckung mit einem höheren Wasseranteil in der ersten Lage zu verlegen, als er nach der Extrusion in der Folie enthalten ist. Bevorzugt ist ein Feuchtegehalt von 2 Gew.-% oder mehr, bezogen auf die in der ersten Lage enthaltenen Materialien aus der Gruppe umfassend Polyamid, Copolyamid, Polyester, Copolyester, EVOH und PVOH. Der Wassergehalt kann z.B. über Sprühdüsen oder ein Wasserbad bei der Produktion eingebracht werden.

Die Dicke der ersten Lage beträgt vorteilhaft wenigstens 10 µm und höchstens 200 µm, bevorzugt wenigstens 15 µm und höchstens 50 µm. Die Breite liegt üblicherweise im bereich von 6 m bis 22 m, vorzugsweise bei etwa 8 m bis 16 m.

Unter Gesichtspunkten der Fertigung erweist sich eine Ausführung der erfindungsgemäßen Siloabdeckung mit einer ersten Lage in Form einer einschichtigen Kunststofffolie als günstig.

Die zweite Lage enthält vorzugsweise Polyethylen niedriger Dichte (LDPE), Polyethylen mittlerer Dichte (MDPE), Polyethylen hoher Dichte (HDPE), Copolymerisaten aus Ethylen und α-Olefinen (LLDPE), Copolymerisaten aus Ethylen und Vinylacetat (EVA), Copolymerisaten aus Ethylen und ethylenisch ungesättigten Säuren oder Estern, insbesondere Acrylsäure, Methacrylsäure und deren Estern (Ethylenmethylacrylat EMA, Ethylenethylacrylat EEA, Ethylenbutylacrylat EBA), Polypropylen (PP), heterophasischen (Block-Co-PP) oder homogenen (Random-Co-PP) Copolymerisaten aus Propylen und Ethylen. Es ist vorteilhaft, wenn keine anderen polymeren Materialien außer Materialien aus der Gruppe umfassend Polyethylen, Polypropylen, Copolymerisate aus Ethylen und anderen Vinylmonomeren sowie Copolymerisate aus Propylen und anderen Vinylmonomeren enthalten sind. Unter Vinylmonomeren sollen solche mit einer Ethylengruppe verstanden werden, die mit Ethylen copolymerisierbar sind. Hierzu zählen vor allem, aber nicht ausschließlich, α-Olefine mit 2 bis 12 Kohlenstoffatomen - z.B. Ethylen, Propylen, Buten, Penten, Hexen, Okten -, Acrylsäure und deren Ester, Methacrylsäure und deren Ester, Styrol, Diene - z.B. Butadien, Isopren -, Vinylacetat, Cycloolefine -z.B. Norbornen, Cyclopentadien-, und Kohlenmonoxid.

Die zweite Lage kann mineralische Füllstoffe wie beispielsweise, aber nicht ausschließlich, Kalziumcarbonat oder Talkum zur Erhöhung der Steifigkeit enthalten. Die zweite Lage kann Additive in den üblichen Mengen enthalten, z.B. UV-Stabilisatoren und/oder Gleitmittel und/oder mineralische Antiblock-Additive zur Verringerung der Reibungskoeffizienten der Folienoberfläche und/oder Additive zur Einfärbung der Folie enthalten.

In einer bevorzugten Ausführungsform ist die zweite Lage eine, vorzugsweise extrudierte, ein- oder mehrschichtige Kunststofffolie mit einer niedrigeren Wasserdampfdurchlässigkeit als die der ersten Lage. Eine Wasserdampfdurchlässigkeit von höchstens 2,5 g / ( m² d) ist besonders bevorzugt. Hierbei ist einerseits das Siliergut vor unmittelbarem Wasserkontakt durch Kondensation geschützt, andererseits wird eine zu weitgehende Austrocknung des Silos vermieden. Bevorzugt ist eine Dicke zwischen 50 µm und 200 µm, besonders bevorzugt zwischen 50 und 150 µm und insbesondere bevorzugt zwischen 60 und 120 µm.

In einer dritten Ausführungsform wird eine zweite Lage in Form einer ein-oder mehrschichtigen Folie wie bereits beschrieben mit einer dritten Lage kombiniert, die ein beschichtetes oder unbeschichtetes Gewebe oder ein beschichtetes oder unbeschichtetes Netz oder ein beschichtetes oder unbeschichtetes Vlies oder ein beschichtetes oder unbeschichtetes Gitter ist. Hierzu können zweckmäßigerweise handelsübliche, wiederverwendbare Siloschutzgitter aus HDPE oder PP verwendet werden. Typische Flächengewichte liegen im Bereich von 100 g/m² bis 400 g/m², bevorzugt von 200 g/m² bis 350 g/m². Weiterhin sind handelsübliche wiederverwendbare Bändchengewebe aus PP oder HDPE brauchbar. Diese haben in der Regel Flächengewichte im Bereich von 100 g/m² bis 600 g/m², bevorzugt von 200 g/m² bis 400 g/m².

Außerdem ist es möglich, unter der ersten und/oder zwischen der ersten und der zweiten Lage und/oder oberhalb der zweiten bzw. dritten Lage weitere Lagen vorzusehen. Im Hinblick auf Kosten und Aufwand sind jedoch Siloabdeckungen bevorzugt, bei denen die erste Lage direkt auf dem Siliergut aufliegt und eine zweite Lage in Form einer Kunststofffolie auf der ersten Lage aufliegt, mit oder ohne Abdeckung durch ein Gitter, Gewebe, Netz oder Vlies.

Es ist bevorzugt die erste Lage und die zweite Lage sowie ggfs. weitere Lagen als getrennt vorliegende Lagen aber vorkonfektionierte Einheit bereitzustellen, wobei alle derart vorkonfektionierten Lagen so miteinander aufgerollt und/oder gefaltet sind, dass sie in einem Arbeitsgang durch gemeinsames Entrollen und/oder Auffalten auf das Haufwerksilo aufgebracht werden können.

Es ist besonders günstig, die erste Lage und die zweite Lage durch Coextrusion mit geringer Verbundhaftung zwischen den Lagen als trennbare und/oder sich selbst trennende Variante herzustellen. Dies ist in Fachkreisen hinlänglich bekannt, da man z.B. bei Barrierefolien für Verpackungen die Schichten über Haftvermittler fest miteinander verbindet um den Effekt der Trennbarkeit bzw. Selbsttrennung zu unterbinden. Ohne Haftvermittler separiert sich die erste Lage von der zweiten Lage vor dem Ausbringen, beim Ausbringen, gegebenenfalls auch durch aktives Trennen der Lagen mit Hilfe mechanischer Hilfsmittel in der Produktions- oder Konfektionierungssphase oder durch den Ausbringer, oder nach einigen Tagen Liegedauer auf dem Haufwerksilo begünstigt durch unterschiedliche physikalisch-chemische Effekte (Evaporations-, Diffusions- und Kondensationsprozesse, welche durch die unterschiedlichen molekularen Strukturen der verwendeten Materialien gegeben sind). Diese Herstellungsweise eignet sich insbesondere für eine erfindungsgemäßen Siloabdeckung, bei der die erste Lage aus einer oder mehreren Schichten besteht, die in jeder Schicht Mischungen aus PA6 und anderen Polyamiden und/oder Copolyamiden, noch weiter bevorzugt Mischungen aus PA6 und PA6/66, enthält und bei der die zweite Lage zu wenigstens 70% aus Materialien umfassend Polyethylen niedriger Dichte (LDPE), Polyethylen mittlerer Dichte (MDPE), Polyethylen hoher Dichte (HDPE), Copolymerisaten aus Ethylen und α-Olefinen (LLDPE), Copolymerisaten aus Ethylen und Vinylacetat (EVA), Copolymerisaten aus Ethylen und Säuren oder Acrylaten (EMA, EEA, EBA), Polypropylen (PP), heterophasischen (Block-Co-PP) oder homogenen (Random-Co-PP) Copolymerisaten aus Propylen und Ethylen, besteht.

In einer bevorzugten Ausführungsform besteht zumindest eine Lage aus einer extrudierten ein- oder mehrschichtigen Kunststofffolie mit wenigstens einer Schicht, die eine Schaumstruktur enthält. Dies ist besonders für die Separierung der ersten und zweiten Lage bei durch Coextrusion mit geringer Verbundhaftung hergstellten Siloabdeckungen günstig.

Es ist möglich einer oder mehrere Lagen der erfindungsgemäßen Siloabdeckung einzufärben und/oder zu bedrucken und/oder mit streifenförmigen Markierungen zu versehen.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen der zweckmäßigen, günstigen und bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiel 1

Getrennt vorliegende Einheit: Eine Unterziehfolie aus 80 % PA 6/66 (Ultramid^{®} C33 L 01, BASF SE) und 20 % PA 6 (Ultramid B40, BASF SE) wurde in einer Dicke von 18 µm und einer Breite von 8 m auf einer üblichen Anlage zur Herstellung von Blasfolien als Monofolie extrudiert. Diese erste Lage wurde mit einer handelsüblichen polyolefinischen Silofolie der Firma RKW SE, vertrieben unter dem Handelsnamen wepelen^{®} Siloplus, mit einer Dicke von 80 µm und einer Breite von 8 m als zweiter Lage kombiniert.

### Beispiel 2

Trennbar und/oder sich trennend vorliegende Einheit: Eine Folie wie in Beispiel 1 wurde durch Coextrusion hergestellt wobei die erste Schicht in einer Dicke von ca. 18 µm als erste bzw. innere dem Silo zugewandte Lage wie in Beispiel 1 aus PA bestand und die zweite und dritte Schicht als zweite, dem Silo abgewandte Lage in 80 µm Dicke analog einer handelsüblichen polyolefinischen Silofolie aus Polyethylen bestand. Auf diesem Weg wurde eine 3-Schicht coextrudierte Folie in 8 m Breite hergestellt bei der sich die erste Lage (Innenschicht) von der zweiten Lage (Mittel- und Aussenschicht) durch abziehen trennen lässt bzw. die sich durch entsprechende physikalisch-chemische Prozesse auf dem Silo mit der Zeit selbst voneinander lösen.

### Beispiel 3 (Vergleich)

Als Vergleich wurde die isolierte Verwendung der Unterziehfolie aus Beispiel 1 herangezogen.

### Beispiel 4 (Vergleich)

Eine Folie wie die Unterziehfolie in Beispiel 1 wurde mit einer Dicke von 35 µm blasextrudiert und wie in Beispiel 3 als einzige Siloabdeckung verwendet.

### Beispiel 5 (Vergleich)

Als weitere Vergleichsfolie diente eine handelsübliche polyolefinische Unterziehfolie der Firma RKW SE, vertrieben unter dem Handelsnamen wepelen^{®} Silo 40, mit einer Dicke von 40 µm und einer Breite von 8 m.

### Beispiel 6 (Vergleich)

Als weitere Vergleichsfolie diente die handelsübliche polyolefinische Silofolie, die in Beispiel 1 die zweite Lage bildet, jedoch mit einer Dicke von 150 µm.

### Beispiel 7 (Vergleich)

Als weitere Vergleichsfolie diente eine Kombination aus einer Unterziehfolie nach Beispiel 5 und einer Silofolie nach Beispiel 6.

### Beispiel 8 (Vergleich)

Als weitere Vergleichsfolie diente eine Kombination aus einer Unterziehfolie nach Beispiel 5 und einer Silofolie nach Beispiel 6, wobei die Silofolie jedoch eine Dicke von 60 µm aufweist.

### Beispiel 9 (Vergleich)

Als weitere Vergleichsfolie diente eine handelsübliche Folie des Typs "Silostop^{®}" mit dem Aufbau PE/PA/PE in der Dicke 45 µm.

Für sämtliche Folien bzw. Folienkombinationen wurden folgende Parameter wie folgt bestimmt: die Dicke nach DIN 53370, das Flächengewicht: nach EN ISO 2286-2, die Wasserdampfdurchlässigkeit nach ISO 15106-3 bei 23 °C und 85 % relativer Feuchte, die Sauerstoffdurchlässigkeit nach DIN 53380-3 bei 23 °C und 50 % relativer Feuchte und der Dart Drop nach ISO 7765 -1 Methode A, für Folienkombinationen ermittelt durch Addition der Einzelwerte.

Die Siloabdeckungen wurden auf einem Haufwerksilo aus Maissilage aufgebracht. Neben den im Labor gemessenen physikalischen Eigenschaften wurde hier beobachtet, inwieweit die Oberfläche der Silage frei von Feuchtenestern durch Kondensation auf der Innenseite der Siloabdeckung ist. Alle Ergebnisse sind in Tabelle 1 zusammengefasst.

**Tabelle 1**

| **Beispiel** | **1** | **2** | **3** | **4** | **5** | **6** | **7** | **8** | **9** |
|---|---|---|---|---|---|---|---|---|---|
| Dicke [µm] | 100 | 100 | 18 | 35 | 40 | 150 | 190 | 100 | 45 |
| Flächengewicht g/m² | 94 | 94 | 21 | 41 | 37 | 138 | 175 | 94 | 42 |
| Wasserdampfdurchlässigkeit [g / ( m² d)] | 1,0 | 1,0 | 70 | 35 | 1,5 | 0,5 | 0,4 | 1,0 | 1,6 |
| Sauerstoffdurchlässigkeit [N cm³ / (m² d bar)] | 30 | 30 | 30 | 15 | 4710 | 1195 | 910 | 2450 | 65 |
| Dart Drop [g] | 850 | 850 | 603 | 690 | 131 | 304 | 435 | 280 | 760 |
| Stoffliche Rezyklierbarkeit | ja | ja | ja | ja | ja | ja | ja | ja | nein |
| Feuchtenester | nein | nein | nein | nein | nein | ja | ja | ja | ja |
| Austrocknung und Qualitätsverlust der oberen Schicht im Silo | nein | nein | ja | ja | nein | nein | nein | nein | nein |

Es zeigte sich überraschend, dass bei einer Abdeckung gemäß Vergleichsbeispiel 4 die Verdichtung der obersten Schicht im Silo über die Zeit deutlich zurückgegangen ist. Hierdurch stellte sich eine abweichende Einfärbung der obersten Schicht ein. Dieses Phänomen lässt sich durch eine oberflächliche Austrocknung des Silos erklären, wodurch die Kohäsion innerhalb der obersten Silageschicht abnahm und diese folglich auffederte. Die lokal geringere Verdichtung hatte eine schlechtere Silagequalität der obersten Schicht als direkte Folge.

Gegenüber handelsüblichen rein polyolefinischen Siloabdeckungen gemäß den Vergleichsbeispielen 6 und 7 weist die erfindungsgemäße Siloabdeckung nach Beispiel 1 oder 2 den erheblichen Vorteil einer niedrigeren Sauerstoffdurchlässigkeit und einer hohen mechanischen Festigkeit auf. Somit wird bei besseren Voraussetzungen für ein gutes Silierergebnis eine überraschend deutliche Reduzierung der Foliendicke und damit des Ressourceneinsatzes ermöglicht.

Gegenüber einer Verbundfolie aus Polyethylen und Polyamid gemäß Vergleichsbeispiel 9 weist die erfindungsgemäße Siloabdeckung nach Beispiel 1 oder 2 den Vorteil der stofflichen Rezyklierbarkeit und des daher ebenfalls geringeren Ressourcenverbrauchs auf. Darüberhinaus wird in der Anwendung im Silo die Bildung von Kondensat unter der Siloabdeckung überraschend wirksam vermieden, so dass die Bildung von Schimmel nachhaltig verhindert wird.

Gegenüber einer reinen PA-Monofolie gemäß Vergleichsbeispiel 4 trocknet die Silage bei der erfindungsgemäßen Abdeckung nicht aus, so dass die Qualität der Silage ebenfalls erhöht ist.

Die erfindungsgemäße Siloabdeckung weist die geforderten Eigenschaften auf. Alle Lagen der Abdeckung können getrennt, trennbar oder sich trennend gefertigt werden. Die Siloabdeckung ist gut rezyklierbar, denn die verschiedenen Polymere liegen in getrennten, nicht fest mit einander verbundenen Lagen vor. Sie ist sauerstoffundurchlässig, was für die Produktion qualitativ hochwertiger Silagen unabdingbar ist. Sie verhindert Schimmel durch Feuchtenester mittels nur aufliegenden Wasserdampfsperrschicht, wobei gleichzeitig auch eine Austrocknung des Siliergutes verhindert wird. Sie weist nur etwa 30-70% der Masse einer vergleichbaren Standardabdeckung auf und ist dadurch deutlich leichter handhabbar. Sie ist für den Anwender deutlich einfacher auslegbar, da die Folien in einem Arbeitsgang ausgelegt werden können und die Abdeckung aufgrund der Materialreduktion (vgl. Bsp. 1 oder 2 mit Bsp. 7) deutlich weniger Masse besitzt. Sie genügt mit einem Dart Drop von wenigstens 300 g, typisch mindestens 450 g und mehr den mechanischen Anforderungen der Praxis an eine Siloabdeckung.

## Patentansprüche

1. Silageabdeckung umfassend wenigstens zwei Lagen, mit einer inneren dem Silo zugewandten ersten Lage, die eine ein- oder mehrschichtige Kunststofffolie mit einer Sauerstoffdurchlässigkeit nach DIN 53380-3 bei 23 °C und 50 % relativer Feuchte von höchstens 500 cm³ / (m² d bar) und mit einer Wasserdampfdurchlässigkeit nach ISO 15106-3 bei 23 °C und 85 % relativer Feuchte von wenigstens 5 g / (m² d) ist und in wenigstens einer Schicht insgesamt wenigstens 50 Gew.-% einer oder mehrerer Materialien aus der Gruppe umfassend Polyamid, Copolyamid, Polyester, Copolyester, Polyethylenvinylalkohol, Polyvinylalkohol und Mischungen davon enthält, sowie wenigstens einer weiteren, darüber liegenden zweiten Lage, bestehend zu wenigstens 70 Gew.-% aus Materialien aus der Gruppe umfassend Polyethylen, Polypropylen, Copolymerisate aus Ethylen und anderen Vinylmonomeren sowie Copolymerisate aus Propylen und anderen Vinylmonomeren,
**dadurch gekennzeichnet, dass** die Silageabdeckung durch Coextrusion ohne Haftvermittler zwischen der ersten und der zweiten Lage herstellbar ist, so dass sich vor dem Ausbringen, beim Ausbringen, oder durch aktives Trennen der Lagen bei der Ausbringung, oder nach einigen Tagen Liegedauer auf einem Haufwerksilo die erste von der zweiten Lage separiert, wobei die Silageabdeckung in einem Arbeitsgang auf ein Silo aufgebracht werden kann.

2. Silageabdeckung nach Anspruch 1, **dadurch gekennzeichnet, dass** die erste Lage eine Sauerstoffdurchlässigkeit nach DIN 53380-3 bei 23 °C und 50 % relativer Feuchte von höchstens 100 cm³ / (m² d bar) und eine Wasserdampfdurchlässigkeit nach ISO 15106-3 bei 23 °C und 85 % relativer Feuchte von wenigstens 25 g / (m² d) aufweist.

3. Silageabdeckung nach Anspruch 1 oder 2, **dadurch gekennzeichnet, dass** die erste Lage in wenigstens einer Schicht neben Materialien aus der Gruppe umfassend Polyamid, Copolyamid, Polyester, Copolyester, Polyethylenvinylalkohol, Polyvinylalkohol und Mischungen davon, höchstens 20 % weitere polymere Bestandteile enthält.

4. Silageabdeckung nach mindestens einem der Ansprüche 1 bis 3, **dadurch gekennzeichnet, dass** die erste Lage in wenigstens einer Schicht Mischungen aus Polyamiden und/oder Copolyamiden, sowie gegebenenfalls Additive zur Erhöhung der Stabilität gegenüber UV-Strahlung und/oder Gleitmittel und/oder mineralische Antiblock-Additive zur Verringerung der Reibungskoeffizienten der Folienoberfläche und/oder Additive zur Einfärbung der Folie enthält.

5. Silageabdeckung nach mindestens einem der Ansprüche 1 bis 4, **dadurch gekennzeichnet, dass** die erste Lage in jeder Schicht Mischungen aus Polyamiden und/oder Copolyamiden, sowie gegebenenfalls Additive zur Erhöhung der Stabilität gegenüber UV-Strahlung und/oder Gleitmittel und/oder mineralische Antiblock-Additive zur Verringerung der Reibungskoeffizienten der Folienoberfläche und/oder Additive zur Einfärbung der Folie enthält.

6. Silageabdeckung nach mindestens einem der Ansprüche 1 bis 5, **dadurch gekennzeichnet, dass** die erste Lage aus einer einschichtigen Kunststofffolie besteht.

7. Silageabdeckung nach mindestens einem der Ansprüche 1 bis 6, **dadurch gekennzeichnet, dass** die erste Lage eine Dicke von wenigstens 15 um und höchstens 50 µm aufweist.

8. Silageabdeckung nach mindestens einem der Ansprüche 1 bis 7, **dadurch gekennzeichnet, dass** die zweite Lage aus einer extrudierten ein- oder mehrschichtigen Kunststofffolie besteht.

9. Silageabdeckung nach mindestens einem der Ansprüche 1 bis 8, **dadurch gekennzeichnet, dass** die zweite Lage eine niedrigere Wasserdampfdurchlässigkeit als die der ersten Lage aufweist.

10. Silageabdeckung nach Anspruch 9, **dadurch gekennzeichnet, dass** zweite Lage eine Wasserdampfdurchlässigkeit nach ISO 15106-3 von höchstens 2,5 g / (m² d) bei 23 °C, 85 % relativer Feuchte aufweist.

11. Silageabdeckung nach mindestens einem der Ansprüche 1 bis 10, **dadurch gekennzeichnet, dass** die zweite Lage zu wenigstens 70 Gew.-% Polyethylen niedriger Dichte (LDPE), Polyethylen mittlerer Dichte (MDPE), Polyethylen hoher Dichte (HDPE), Copolymerisaten aus Ethylen und α-Olefinen (LLDPE), Copolymerisaten aus Ethylen und Vinylacetat (EVA), Copolymerisaten aus Ethylen und Acrylsäure, Methacrylsäure oder deren Estern, Polypropylen (PP), heterophasischen (Block-Co-PP) oder homogenen (Random-Co-PP) Copolymerisaten aus Propylen und Ethylen besteht.

12. Silageabdeckung nach mindestens einem der Ansprüche 1 bis 11, **dadurch gekennzeichnet, dass** die erste Lage aus Polyamiden, Copolyamiden und ggfs. Additiven und die zweite Lage zu wenigstens 70 Gew.-% Polyethylen niedriger Dichte (LDPE), Polyethylen mittlerer Dichte (MDPE), Polyethylen hoher Dichte (HDPE), Copolymerisaten aus Ethylen und α-Olefinen (LLDPE), Copolymerisaten aus Ethylen und Vinylacetat (EVA), Copolymerisaten aus Ethylen und Säuren oder Acrylaten, Polypropylen (PP), heterophasischen (Block-Co-PP) oder homogenen (Random-Co-PP) Copolymerisaten aus Propylen und Ethylen und ggfs. Additiven besteht.

13. Silageabdeckung nach mindestens einem der Ansprüche 8 bis 12, **dadurch gekennzeichnet, dass** die erste Lage und die zweite Lage durch Coextrusion mit geringer Verbundhaftung zwischen der ersten Lage und der zweiten Lage hergestellt sind.

14. Silageabdeckung nach mindestens einem der Ansprüche 8 bis 13, **dadurch gekennzeichnet, dass** zumindest eine Lage, vorzugsweise die zweite Lage, aus einer extrudierten ein- oder mehrschichtigen Kunststofffolie mit wenigstens einer Schicht, die eine Schaumstruktur enthält, besteht.

15. Silageabdeckung nach mindestens einem der Ansprüche 1 bis 14, **dadurch gekennzeichnet, dass** zweite Lage eine Dicke von 50 µm bis 150 µm hat.

16. Silageabdeckung nach mindestens einem der Ansprüche 1 bis 15, **dadurch gekennzeichnet, dass** zumindest die erste Lage und die zweite Lage derart miteinander aufgerollt und/oder gefaltet sind, dass sie in einem Arbeitsgang durch gemeinsames Entrollen und/oder Auffalten ausgebreitet werden können.

17. Silageabdeckung nach mindestens einem der Ansprüche 1 bis 16, **dadurch gekennzeichnet, dass** eine oder mehrere Lagen eingefärbt und/oder bedruckt sind und/oder streifenförmige Markierungen aufweisen.

18. Silageabdeckung nach mindestens einem der Ansprüche 1 bis 17, **dadurch gekennzeichnet, dass** über der zweiten Lage eine weitere Lage aus einem beschichteten oder unbeschichteten Gewebe oder einem beschichteten oder unbeschichteten Netz oder einem beschichteten oder unbeschichteten Vlies oder einem beschichteten oder unbeschichteten Gitter angeordnet ist.

19. Verwendung der Silageabdeckung nach mindestens einem der Ansprüche 1 bis 18 zur Abdeckung von Haufwerksilos wie Fahrsilos oder Freigärhaufen.

## Claims

1. Silage cover, comprising at least two layers, having an inner first layer facing the silo which is a single- or multi-ply plastic film having an oxygen permeability according to DIN 53380-3 at 23 °C and 50 % relative humidity of no more than 500 cm³ / (m² d bar) and a water vapor transmission rate according to ISO 15106-3 at 23 °C and 85 % relative humidity of at least 5 g / (m² d) and in at least one ply in total contains at least 50 % by weight of one or more materials from the group comprising polyamide, copolyamide, polyester, copolyester, polyethylene vinyl alcohol, polyvinyl alcohol and mixtures thereof, and at least one further second layer, which is located thereon and consists of at least 70 % by weight of materials from the group comprising polyethylene, polypropylene, copolymers of ethylene and other vinyl monomers, and copolymers made of propylene and other vinyl monomers,
**characterized in that** the silage cover is obtainable by way of co-extrusion without adhesion promoter between the first layer and the second layer, so that the first layer separates from the second layer prior to being applied, during application, or by active separation of the layers during application, or after lying on the heap silo for a few days, wherein the silage cover can be applied in a single operation onto a silo.

2. Silage cover according to claim 1, **characterized in that** the oxygen permeability of the first layer according to DIN 53380-3 at 23 °C and 50 % relative humidity is no more than 100 cm³ / (m² d bar) and the water vapor transmission rate thereof according to ISO 15106-3 at 23 °C and 85 % relative humidity is at least 25 g / (m² d).

3. Silage cover according to claim 1 or 2, **characterized in that** the first layer, in at least one ply, contains no more than 20 % additional polymeric components, aside from materials from the group comprising polyamide, copolyamide, polyester, copolyester, polyethylene vinyl alcohol, polyvinyl alcohol and mixtures thereof.

4. Silage cover according to at least one of claims 1 to 3, **characterized in that** the first layer, in at least one ply, contains mixtures of polyamides and/or copolyamides, and optionally additives to increase UV radiation stability and/or lubricants and/or mineral anti-block additives to lower the coefficient of friction of the film surface and/or additives for coloring the film.

5. Silage cover according to at least one of claims 1 to 4, **characterized in that** the first layer, in each ply, contains mixtures of polyamides and/or copolyamides, and optionally additives to increase UV radiation stability and/or lubricants and/or mineral anti-block additives to lower the coefficient of friction of the film surface and/or additives for coloring the film.

6. Silage cover according to at least one of claims 1 to 5, **characterized in that** the first layer consists of a single-ply plastic film.

7. Silage cover according to at least one of claims 1 to 6, **characterized in that** the first layer has a thickness of at least 15 µm and no more than 50 µm.

8. Silage cover according to at least one of claims 1 to 7, **characterized in that** the second layer consists of an extruded single- or multi-ply plastic film.

9. Silage cover according to at least one of claims 1 to 8, **characterized in that** the water vapor transmission rate of the second layer is lower than that of the first layer.

10. Silage cover according to claim 9, **characterized in that** the water vapor transmission rate of the second layer according to ISO 15106-3 at 23 °C and 85 % relative humidity is no more than 2.5 g / ( m² d).

11. Silage cover according to at least one of claims 1 to 10, **characterized in that** the second layer consists of at least 70 % by weight of low-density polyethylene (LDPE), medium-density polyethylene (MDPE), high-density polyethylene (HDPE), copolymers of ethylene and α-olefins (LLDPE), copolymers of ethylene and vinyl acetate (EVA), copolymers of ethylene and acrylic acid, methacrylic acid or the esters thereof, polypropylene (PP), heterophasic (block co-PP) or homogeneous (random co-PP) copolymers of propylene and ethylene.

12. Silage cover according to at least one of claims 1 to 11, **characterized in that** the first layer consists of polyamides, copolyamides and optionally additives, and the second layer consists of at least 70 % by weight of low-density polyethylene (LDPE), medium-density polyethylene (MDPE), high-density polyethylene (HDPE), copolymers of ethylene and α-olefins (LLDPE), copolymers of ethylene and vinyl acetate (EVA), copolymers of ethylene and acids or acrylates, polypropylene (PP), heterophasic (block co-PP) or homogeneous (random co-PP) copolymers of propylene and ethylene, and optionally additives.

13. Silage cover according to at least one of claims 8 to 12, **characterized in that** the first layer and the second layer are produced by way of co-extrusion with low adhesive bonding between the first layer and the second layer.

14. Silage cover according to at least one of claims 8 to 13, **characterized in that** at least one layer, preferably the second layer, consists of an extruded single- or multi-ply plastic film comprising at least one ply that contains a foam structure.

15. Silage cover according to at least one of claims 1 to 14, **characterized in that** the second layer has a thickness of between 50 µm and 150 µm.

16. Silage cover according to at least one of claims 1 to 15, **characterized in that** at least the first layer and the second layer are rolled and/or folded together such that they can be spread in a single operation by unrolling and/or unfolding.

17. Silage cover according to at least one of claims 1 to 16, **characterized in that** one or more layers are dyed and/or imprinted and/or contain stripe-shaped markings.

18. Silage cover according to at least one of claims 1 to 17, **characterized in that** another layer made of a coated or uncoated woven fabric, or a coated or uncoated net, or a coated or uncoated non-woven fabric, or a coated or uncoated mesh, is arranged on top of the second layer.

19. Use of Silage cover according to at least one of claims 1 to 18 for covering heap silos such as bunker silos or open silo pits.

## Revendications

1. Couverture d'ensilage comprenant au moins deux couches, avec une première couche interne tournée vers l'ensilage, qui est une feuille de matière plastique à une ou plusieurs couches avec une perméabilité à l'oxygène selon DIN 53380-3 à 23 °C et une humidité relative à 50 % d'au plus 500 cm³/(m² d bar) et avec une perméabilité à la vapeur d'eau selon ISO 15106-3 à 23 °C et une humidité relative à 85 % d'au moins 5 g/(m² d) et contient dans au moins une strate dans l'ensemble au moins 50 % en poids d'un ou plusieurs matériaux issus du groupe comprenant le polyamide, le copolyamide, le polyester, le copolyester, l'alcool vinylique de polyéthylène, l'alcool polyvinylique et des mélanges de ceux-ci, ainsi qu'au moins une seconde couche supplémentaire disposée par-dessus celle-ci, se composant d'au moins 70 % en poids de matériaux issus du groupe comprenant le polyéthylène, le polypropylène, les copolymères à base d'éthylène et d'autres monomères de vinyle ainsi que des copolymères à base de propylène et d'autres monomères de vinyle,
**caractérisée en ce que** la couverture d'ensilage est apte à être produite par coextrusion sans agents liants entre la première et la seconde couche, de sorte que, avant l'épandage, lors de l'épandage ou par une séparation active des couches lors de l'épandage, ou après une durée de séjour de quelques jours sur un ensilage de débris la première couche est séparée de la seconde couche, dans laquelle la couverture d'ensilage peut être appliquée sur un ensilage lors d'une phase de travail.

2. Couverture d'ensilage selon la revendication 1, **caractérisée en ce que** la première couche présente une perméabilité à l'oxygène selon DIN 53380-3 à 23 °C et une humidité relative à 50 % d'au plus 100 cm³/(m² d bar) et une perméabilité à la vapeur d'eau selon ISO 15106-3 à 23 °C et une humidité relative à 85 % d'au moins 25 g/(m² d).

3. Couverture d'ensilage selon la revendication 1 ou 2, **caractérisée en ce que** la première couche contient d'autres constituants polymères dans au moins une strate à côté de matériaux issus du groupe comprenant le polyamide, le copolyamide, le polyester, le copolyester, l'alcool vinylique de polyéthylène, l'alcool polyvinylique et des mélanges de ceux-ci, au plus à raison de 20 %.

4. Couverture d'ensilage selon au moins l'une quelconque des revendications 1 à 3, **caractérisée en ce que** la première couche contient dans au moins une strate des mélanges à base de polyamides et/ou de copolyamides, ainsi que le cas échéant des additifs destinés à l'accroissement de la stabilité par rapport au rayonnement UV et/ou des lubrifiants et/ou des additifs antiblocs minéraux destinés à la réduction des coefficients de frottement de la surface de feuille et/ou des additifs destinés à la coloration de la feuille.

5. Couverture d'ensilage selon au moins l'une quelconque des revendications 1 à 4, **caractérisée en ce que** la première couche dans chaque strate contient des mélanges à base de polyamides et/ou de copolyamides, ainsi que le cas échéant des additifs destinés à l'accroissement de la stabilité par rapport au rayonnement UV et/ou des lubrifiants et/ou des additifs antiblocs minéraux destinés à la réduction des coefficients de frottement de la surface de feuille et/ou des additifs destinés à la coloration de la feuille.

6. Couverture d'ensilage selon au moins l'une quelconque des revendications 1 à 5, **caractérisée en ce que** la première couche se compose d'une feuille de matière plastique à une strate.

7. Couverture d'ensilage selon au moins l'une quelconque des revendications 1 à 6, **caractérisée en ce que** la première couche présente une épaisseur d'au moins 15 µm et d'au plus 50 µm.

8. Couverture d'ensilage selon au moins l'une quelconque des revendications 1 à 7, **caractérisée en ce que** la seconde couche se compose d'une feuille en matière plastique extrudée à une ou plusieurs couches.

9. Couverture d'ensilage selon au moins l'une quelconque des revendications 1 à 8, **caractérisée en ce que** la seconde couche présente une perméabilité à la vapeur d'eau plus faible que celle de la première couche.

10. Couverture d'ensilage selon la revendication 9, **caractérisée en ce que** la seconde couche présente une perméabilité à la vapeur d'eau selon ISO 15106-3 d'au plus 2,5 g/(m² d) à 23 °C, une humidité relative à 85 %.

11. Couverture d'ensilage selon au moins l'une quelconque des revendications 1 à 10, **caractérisée en ce que** la seconde couche se compose d'au moins 70 % en poids de polyéthylène de faible densité (LDPE), de polyéthylène de moyenne densité (MDPE), de polyéthylène de haute densité (HDPE), de copolymères à base d'éthylène et d'a-oléfines (LLDPE), de copolymères à base d'éthylène et d'acétate de vinyle (EVA), de copolymères à base d'éthylène et d'acide acrylique, d'acide méthacrylique ou d'esters de ceux-ci, de polypropylène (PP), de copolymères hétérophasiques (copolymères de polypropylène à blocs) ou de copolymères homogènes (copolymères de polypropylène aléatoires) à base de propylène et d'éthylène.

12. Couverture d'ensilage selon au moins l'une quelconque des revendications 1 à 11, **caractérisée en ce que** la première couche se compose de polyamides, de copolyamides et le cas échéant d'additifs et la seconde couche se compose d'au moins 70 % en poids de polyéthylène de faible densité (LDPE), de polyéthylène de moyenne densité (MDPE), de polyéthylène de haute densité (HDPE), de copolymères à base d'éthylène et d'a-oléfines (LLDPE), de copolymères à base d'éthylène et d'acétate de vinyle (EVA), de copolymères à base d'éthylène et d'acides ou d'acrylates, de polypropylène (PP), de copolymères hétérophasiques (copolymères de polypropylène à blocs) ou de copolymères homogènes (copolymères de polypropylène aléatoires) à base de propylène et d'éthylène et le cas échéant d'additifs.

13. Couverture d'ensilage selon au moins l'une quelconque des revendications 8 à 12, **caractérisée en ce que** la première couche et la seconde couche sont produites par coextrusion avec une adhérence réduite entre la première couche et la seconde couche.

14. Couverture d'ensilage selon au moins l'une quelconque des revendications 8 à 13, **caractérisée en ce qu'**au moins une couche, de préférence la seconde couche, se compose d'une feuille de matière plastique extrudée à une ou plusieurs strates avec au moins une strate qui contient une structure en mousse.

15. Couverture d'ensilage selon au moins l'une quelconque des revendications 1 à 14, **caractérisée en ce que** la seconde couche a une épaisseur de 50 µm à 150 µm.

16. Couverture d'ensilage selon au moins l'une quelconque des revendications 1 à 15, **caractérisée en ce qu'**au moins la première couche et la seconde couche sont enroulées et/ou pliées ensemble de telle sorte qu'elles peuvent être élargies lors d'une phase de travail par un déroulement et/ou un dépliage commun.

17. Couverture d'ensilage selon au moins l'une quelconque des revendications 1 à 16, **caractérisée en ce qu'**une ou plusieurs couches sont colorées et/ou imprimées et/ou présentent des marquages en forme de bandes.

18. Couverture d'ensilage selon au moins l'une quelconque des revendications 1 à 17, **caractérisée en ce que** par-dessus la seconde couche est disposée une autre couche à base de tissu revêtu ou non revêtu ou d'un filet revêtu ou non revêtu ou d'un matériau non tissé revêtu ou non revêtu ou d'un treillis revêtu ou non revêtu.

19. Utilisation de la couverture d'ensilage selon au moins l'une quelconque des revendications 1 à 18 destinée au recouvrement d'un silo de débris comme des silos couloirs ou des tas de fermentation libre.
